# EUROPEAN PATENT APPLICATION

(11) **EP 1 264 668 A2**
(43) Date of publication of application: **11.12.2002**
(21) Application number: 02253638.7
(22) Date of filing: 23.05.2002
(51) Int. Cl.: B25J 21/02

(54) **Containment assembly with a collapsible housing**

(30) Priority: 04.06.2001 GB 0113497
(71) Applicant: Extract Technology Limited, Huddersfield HD2 1UR (GB)
(72) Inventor: Cocker, Neil, Penistone, South Yorkshire (GB); Leach, Francis, Mirfield, West Yorkshire WF14 0JY (GB)
(74) Representative: Stuttard, Garry Philip

(57) **Abstract**

The present invention relates to a containment assembly in which the processing zone is enclosed by a robustly supported, collapsible housing (3) adapted to permit an operator outside the processing zone to reach into the processing zone.

## Description

The present invention relates to a containment assembly in which the processing zone is enclosed by a robustly supported, collapsible housing.

Effective containment is essential for the safe and hygienic handling of a pharmaceutical, chemical or biological product. At each stage, handling must be controlled and managed to provide optimum protection for the operator and for maintaining the integrity of the product. For example, current Good Manufacturing Practices exercised within the pharmaceutical manufacturing industry demand good containment performance and acceptable operator exposure levels.

For handling a solid (*eg* powder) or liquid product of a sensitive or hazardous (*eg* toxic) nature in a processing zone, there are available a number of different types of containment assembly. In one such containment assembly, the air quality in and around the processing zone may be controlled using forced ventilation. One category of forced ventilation is "down flow" in which surrounding air is pushed downwardly to entrain airborne particles to a level below the processing zone (*eg* to a level below the typical operator's breathing zone). For down flow containment, exhaust is usually carried out at low level relative to the source of particles. This permits the down flow assembly to provide operator, product and/or environmental protection for a range of powder and liquid handling applications. A down flow containment assembly may comprise an operator booth of sufficient size to admit the operator for the purposes of (for example) manipulating powder handling equipment *(eg* large powder kegs or bins or weighing devices).

An alternative conventional containment assembly is a barrier isolator with gloved access to the processing zone in which a product and/or handling equipment may be manipulated. A barrier isolator offers two fold protection, namely the use of glove ports to maintain a physical barrier between the product and the operator and a fan system to create air flow for removing airborne particles from the processing zone and into filters. In this manner, a barrier isolator can achieve high containment typically down to less than 10µg/m³ of contaminant in the surrounding environment.

In each of the conventional assemblies, the processing zone is defined at least in part by a panelled framework structure. Steel or aluminium are the preferred materials for the structure. A disadvantage of the conventional assemblies is that at the conclusion of each processing operation, the interior surfaces of the structure must be thoroughly cleaned by the operator before a further processing operation is begun. Many parts of the interior surface will be difficult to access and cleaning is therefore a less than straightforward and lengthy process which would generally be carried out by a skilled operator to try and eliminate the risk of cross-contamination. This is of particular importance in the manufacture of pharmaceuticals.

The present invention seeks to address certain disadvantages of conventional containment assemblies by enclosing the processing zone within a collapsible housing composed of efficiently disposable material. More particularly, the invention relates to a containment assembly in which a robustly supported, collapsible housing enclosing the processing zone is readily replaceable thereby substantially eliminating the risk of cross-contamination and dispensing with the need for cleaning the interior surfaces of the processing zone between processing operations.

Thus viewed from one aspect the present invention provides a containment assembly comprising:
a body defining an interior cavity; and
a collapsible housing erected in the interior cavity so as to enclose a processing zone, wherein the surface of the collapsible housing is adapted or adaptable to permit an operator outside the processing zone to reach into the processing zone.

The versatility of the containment assembly of the invention is such that it may be used in numerous applications including the containment of chemical, pharmaceutical or biological (eg microbiological) powders or liquids. The low cost of the containment assembly and the efficiency of the disposable housing will be particularly attractive to smaller companies and non-profit organisations such as health authorities.

Preferably the collapsible housing is faceted with one face being adapted or adaptable to permit an operator outside the processing zone to reach into the processing zone. Particularly preferably the collapsible housing is multi-faceted with at least one face being adapted or adaptable to permit an operator outside the processing zone to reach into the processing zone.

In a preferred embodiment, the collapsible housing erected in the interior cavity adopts a substantially cuboidal configuration (eg a box-like configuration) having a rear wall, a front wall, a basal wall, a first side wall, a second side wall and an upper wall, wherein the front wall and/or the rear wall is adapted or adaptable to permit an operator outside the processing zone to reach into the processing zone.

In a preferred embodiment, the collapsible housing is restrained in the interior cavity. The collapsible housing may be restrained in the interior cavity in any conventional manner.

In a preferred embodiment, the containment assembly further comprises: a plurality of restraining means for coupling the collapsible housing to the body. Each restraining means may comprise a first part attached to (or integral with) the collapsible housing capable of engaging a second part. Although the second part may be attached to (or integral with) the body, preferably the second part is attached to (or integral with) the collapsible housing. Generally speaking each restraining means will be effective to withstand collapse of the collapsible housing against any net inward airflow when the containment assembly is used with a negative pressure.

In a preferred embodiment, the collapsible housing is releasably restrained in the interior cavity. For example, the containment assembly further comprises: a plurality of releasable restraining means for releasably coupling the collapsible housing to the body. The term releasable restraining means is intended to include any restraining means which is readily released by the operator. Examples of releasable restraining means include a hook and eye, Velcro^{R} fastenings, press stud fasteners and zip fasteners.

In a preferred embodiment, the surface of the collapsible housing comprises one (or more than one) flexible portion in the shape of a glove (or one (or more than one) flexible portion capable of being deformed into the shape of a glove) which permits an operator outside the processing zone to reach into the processing zone. Preferably the surface of the collapsible housing comprises more than one flexible portion in the shape of a glove (or capable of being deformed into the shape of a glove). Typically the surface of the collapsible housing comprises three flexible portions in the shape of a glove (or capable of being deformed into the shape of a glove).

In a preferred embodiment, the surface of the collapsible housing is adapted to permit an operator outside the processing zone to reach into the processing zone by incorporating an aperture. This embodiment may be advantageously used in so-called "open mode" so that the operator is able to reach into the processing zone unhindered. In the preferred substantially cuboidal configuration, an aperture may be incorporated in the front and/or rear wall.

In a particularly preferred embodiment, the (or each) aperture is fitted with a barrier means adapted or adaptable to permit an operator outside the processing zone to reach into the processing zone. The barrier means defines a physical barrier between the region in which the operator operates ("the operator breathing zone") and the processing zone. The aperture may be fitted with the barrier means in any convenient manner. For example, the aperture may be fitted with the barrier means using a conventional fastening means such as a circumferential zip fastener.

In one embodiment, a first part of the barrier means is composed of flexible material. The flexible material may be supported within a rigid framework (which forms the remaining part of the barrier means).

Preferably the first part of the barrier means comprises one (or more than one) flexible portion in the shape of a glove (or one (or more than one) flexible portion capable of being deformed into the shape of a glove). Particularly preferably the first part of the barrier means comprises more than one flexible portion in the shape of a glove (or capable of being deformed into the shape of a glove). Typically the first part of the barrier means comprises three flexible portions in the shape of a glove (or capable of being deformed into the shape of a glove).

In a preferred embodiment, the (or each) flexible portion in the shape of a glove (or capable of being deformed into the shape of a glove) comprises a flexible sleeve terminating in a gloved end (*eg* a conventional gauntlet). Preferably in use the flexible sleeve extends from the remaining part of the barrier means (*ie* the rigid framework) to beyond the operators elbow (to optimise manoeuverability). The flexible sleeve may be composed of natural or synthetic rubber or polyurethane. The gloved end is typically composed of less flexible material than the flexible sleeve. For example, the gloved end may be composed of thicker polyurethane than that of the flexible sleeve (or alternatively of thicker PVC, rubber or other material).

The gloved end may be integral with the flexible sleeve or attached to the flexible sleeve in any conventional manner. Preferably the joint between the gloved end and the flexible sleeve comprises an internal strengthening ring to which the ends of the gloved end and the flexible sleeve are secured. For example, the ends of the gloved end and the flexible sleeve may be secured to the internal strengthening ring by an elastic band or the like.

The end of the (or each) flexible portion in the shape of a glove (*eg* the flexible sleeve) may comprise a bead or rolled edge for fitting to the remaining part of the barrier means. For example, the bead or rolled edge may be stretchably mounted onto a face ring (eg a groove of the face ring) on the rigid framework of the barrier means to produce an airtight joint. The joint may be strengthened by a strengthening ring (*eg* an o-ring) inserted onto a second groove on the face ring.

Typically the position and orientation of the (or each) flexible portion in the shape of a glove may be tailored to suit the particular operation to be conducted in the processing zone. For example, the (or each) flexible portion in the shape of a glove may be right hand orientated or left handed orientated as desired.

The barrier means may be fully or partially transparent. For example, the barrier means may comprise a transparent window at or near to a typical operator's eye height (or other heights as desired).

Where the collapsible housing is not in open mode incorporating an aperture or the aperture is fitted with a barrier means, the containment assembly of the invention may be used in so-called "isolator mode". This mode is capable of providing high levels of containment and low levels of exposure in the operator breathing zone.

The containment assembly may be adapted to provide non-circulatory air flow in the processing zone. For example, air exhausted from the processing zone may be ducted to atmosphere or to a remote location (eg a fan/filter stack).

In a preferred embodiment, the containment assembly further comprises:
recirculating means for inducing recirculatory airflow in the processing zone,
wherein the interior cavity of the body is adapted at a first end to receive the airflow from the processing zone and at an opposite end to transmit the airflow to the processing zone, wherein the collapsible housing comprises: an outlet in fluid communication with the first end of the interior cavity and an inlet in fluid communication with the opposite end of the interior cavity.

The interior cavity of the body may be adapted to optimise air flow so that in open mode or in isolator mode, the containment assembly may be used in a similar manner to a conventional down flow booth (or hood) in which airborne particles are entrained to a level below a typical operators breathing zone. Typically, the assembly of the invention is adapted so that air flows downwardly in an undisturbed, non-turbulent manner in the processing zone at a predetermined velocity.

Thus in a preferred embodiment the assembly is a down flow containment assembly further comprising:
recirculating means for inducing recirculatory airflow downwardly in the processing zone,
wherein the interior cavity of the body is adapted at or near to its lower end to receive the airflow from the processing zone and at or near to its upper end to transmit the airflow to the processing zone,
wherein the collapsible housing comprises: an outlet adjacent to and in fluid communication with the lower end of the interior cavity and an inlet adjacent to and in fluid communication with the upper end of the interior cavity, said outlet being fitted with a filter element.

By fitting the collapsible housing with the filter element, a "dirty" filter element and collapsible housing may be discarded as a single unit before a new processing operation begins.

In the preferred substantially cuboidal configuration of the collapsible housing, the outlet is incorporated in the basal wall and the inlet in the upper wall.

The filter element may be fitted to the outlet of the collapsible housing using conventional mechanical and/or adhesive means *(eg* using standard adhesives such as urethane adhesives). Typically the filter element fitted to the outlet of the collapsible housing is a part of a conventional HEPA filter *(eg* a 99.97%, H13 rated HEPA filter). The HEPA filter may be mounted in the lower end of the body. A second filter may be mounted downstream of the HEPA filter (*eg* beneath the HEPA filter) and itself may be a second HEPA filter (*eg* a 99.97%, H13 rated HEPA filter).

The means for inducing airflow (non-circulatory or recirculatory) may comprise any conventional fan unit *eg* a fan unit driven by a flange mounted inverter controlled motor which ensures smooth drive via a flexible coupling. The fan unit may be placed downstream from the filters ensuring that it is only exposed to clean filtered air. For downflow, the fan unit is located beneath the processing zone. The fan unit may comprise a double inlet fan optionally (but preferably) with automatic constant volume control which compensates for filter congestion and with set back duty for when the containment assembly is operated in isolator mode. The fan unit may be seated on highly compressed anti-vibration mounts to ensure that no vibration is passed onto the adjacent parts of the body. The fan may be programmable to switch between two different volumetric flow rates for use in closed or isolator mode respectively.

The assembly may further comprise a small vent to ensure that the temperature of the recirculatory air does not rise to unacceptable levels through the action of the recirculating means. The small vent may be controlled by a valve (*eg* between the filter element and recirculating means).

In a preferred embodiment, the containment assembly is adapted to provide net inward airflow (*ie* exhibit a negative pressure relative to the environment). This lessens the risk of airborne particles entering the environment which is particularly useful in open mode where the risk of environmental contamination is high but is equally useful in isolator mode to guard against leakage into the environment following a glove breech.

In a preferred embodiment, the containment assembly is adapted to provide net outward airflow (*ie* exhibit a positive pressure relative to the environment). This is particularly useful in isolator mode where the risk of environmental contamination of the product in the processing zone must be eliminated *eg* in the preparation of injectable medicaments or chemotherapeutic agents. As such, this embodiment is attractive to health authorities and hospitals.

Preferably the body is adapted to attain laminar flow *(eg* perfect laminar flow (PLF)) of air in the processing zone. For this purpose, the inlet of the collapsible housing is preferably fitted with PLF material *(eg* a PLF screen) through which the air flows to the processing zone. For example, the inlet may be fitted with a tensioned monofilament woven screen providing uniform air flow over its entire area. The screen may be fitted to the inlet of the collapsible housing in a conventional manner *(eg* using standard adhesives such as urethane adhesives).

The PLF screen may be a perimeter frame (*eg* of welded steel) which is typically cross-braced (eg with hollow tubes) to resist the tensile forces of a monofilament textile screen stretched and fixed to the perimeter frame. The monofilament textile screen retards the passage of air so that it is forced to pass through with an even velocity distribution (the downflow velocity) which suppresses the rise of fine powder in the collapsible housing.

In certain applications, it may be desirable to further minimise the risk of environmental contamination and for this purpose, the inlet is fitted with a filter element (*eg* a HEPA filter element) through which air flows to the processing zone. This may be useful for containment of microbiological samples.

In an embodiment of the containment assembly of the invention, the upper end of the interior cavity of the body defines a plenum chamber capable of transmitting the airflow downwardly into the processing zone. The plenum chamber may be generally adapted to minimise the plenum volume. Preferably the plenum chamber is adapted to contribute to laminar flow (*eg* perfect laminar flow (PLF)). The plenum chamber may take the form of a profiled canopy capable of providing a smooth and interrupted airflow into the inlet of the collapsible housing fitted with PLF material.

The body may comprise a bleed port (*eg* at its upper end) which is closed for use of the assembly in isolator mode and open for use of the assembly in open mode to allow discharge of air at the same rate as the rate of air entering the aperture incorporated in the collapsible housing. The bleed port may (if desired) be substituted with a filter (*eg* a HEPA filter) to further minimise the risk of environmental contamination.

Laminar flow light fittings or luminaries may be mounted in the upper end of the interior cavity of the body if desired. To increase the utility of the assembly as a workstation, the processing zone may be provided with a work surface.

In an embodiment of the invention, the body further comprises: one or more transfer ports to permit contained transfer from the processing zone to a remote location. Preferably the (or each) transfer port is a tubular transfer port. The remote location may be a second containment assembly and for this purpose the transfer port may be fitted with a rigid transfer tube (*eg* a linear transfer tube or an angled transfer tube such as a mitred transfer tube).

In the preferred substantially cuboidal configuration, a first transfer port may be incorporated into the body adjacent to the first side wall of the collapsible housing and a second transfer port may be incorporated into the body adjacent to the second side wall of the collapsible housing.

The body may be manufactured to meet the requirements of the internal components which it houses. Typically the body will be moulded (eg rotation moulded) and appropriate cavities for internal components may be routed out to conform to the size of the internal components which it houses. Examples of internal components may include one or more filters or a fan unit. For example, one or more filters and a fan unit may be housed in the lower end of the interior cavity.

In a preferred embodiment, the exterior base of the body is fitted with a plurality of mobility means for rendering the containment assembly mobile (*eg* castors). Preferably each means for rendering the containment assembly mobile is mounted on the end of an elongate member (*eg* a steel tube) secured within a conduit in the body. Typically the containment assembly comprises four castors mounted on four steel tubes secured within four conduits in the body. In the preferred substantially cuboidal configuration, the four conduits are disposed adjacent to the vertical edges of the collapsible housing between the front wall, first side wall, second side wall and rear wall.

In a preferred embodiment, the containment assembly further comprises: a plurality of restraining means each capable of coupling the collapsible housing to an elongate member. Each restraining means may comprise a first part attached to (or integral with) the collapsible housing and a second part attached to (or integral with) the collapsible housing, wherein in use the first part extends circumferentially around the elongate member in a first sense (*eg* clockwise) and the second part extends circumferentially around the elongate member in a second sense (*eg* anticlockwise) and the first and second part releasably engage.

Preferably the collapsible housing is erectable from a polymer sheet (*eg* a polymer film sheet). The polymer sheet is composed of flexible material which may be polyurethane or polyvinylchloride (PVC). In a preferred embodiment, the flexible material is polyurethane. Preferably the polyurethane is sufficiently thin to be effectively transparent. Generally speaking, the (or each) flexible portion in the shape of a glove is of thicker polyurethane (or PVC) to guard against tearing.

The polymer sheet may be multi-panelled (*eg* comprise a plurality of panels connected in a conventional manner). The polymer sheet may be fabricated with panels using standard templating methods. Adjacent panels may be joined (*eg* welded) together using (for example) hot plate welding techniques which use electrically heated non-stick shaped elements. The elements contact the adjacent panels and soften the material in a linear localised zone which is compressed to produce the joint before cooling to produce a pressure tight seam.

The plurality of restraining means (*eg* releasable restraining means) may be attached to the polymer sheet in a conventional manner (*eg* by welding). Typically a restraining means is attached (*eg* welded) to each corner of the polymer sheet. Additional restraining means may be attached to one or more edges of the sheet (preferably those edges which are erectable into a vertical edge of the collapsible housing).

Preferably the polymer sheet comprises a pouch or pocket. When erected into the collapsible housing, the pouch may be foldable over the rear face of the filter element to assist the safe change process (see below). The pouch may be provided with a fastener (*eg* a zip or releasable adhesive tape) to contain the filter element during the safe change process.

The pouch may play a key role in preparing the containment assembly for a fresh processing operation (a process often referred to as "the safe change process"). In a typical embodiment the steps of the safe change process are:
(A) an operator dons appropriate personal protection equipment;
(B) the operator reaches into the processing zone (*eg* through an aperture or a flexible portion in the shape of a glove) and the equipment within the collapsible housing is cleaned and decontaminated typically using solvents and wipes;
(C) the clean equipment and any work surface may be withdrawn (*eg* through the open aperture or a transfer port) and the air inflow protects the operator;
(D) the open aperture is closed (eg by fitting the barrier means) and the fan switched off;
(E) each restraining means is decoupled from the body and the vertical edges of the collapsible housing are collapsed inwardly to the central area of the body;
(F) the contaminated filter element is dislodged and temporarily supported to permit the pouch to be unfolded over the contaminated filter element;
(G) the PLF screen is released and the upper part of the collapsible housing is released;
(H) the collapsed collapsible housing, filter element, PLF screen and wipes are bundled into a separate polyurethane bag for safe disposal.

The versatility of the containment assembly of the invention extends to its use in a modular system. The system is particularly useful for carrying out (for example) a fully contained multi-stage synthesis of a chemical or pharmaceutical.

Viewed from a further aspect the present invention provides a modular system comprising a plurality of interconnected containment assemblies as hereinbefore defined.

The present invention will now be described in a non-limitative sense with reference to the accompanying Figures in which:
Figure 1 illustrates a sectional front elevation of an embodiment of the containment assembly of the invention;
Figure 2 illustrates a front view of the embodiment illustrated in Figure 1;
Figure 3 illustrates a side view of the embodiment illustrated in Figure 1;
Figure 4 illustrates a sectional plan of three containment assemblies of the invention connected together in an embodiment of the system of the invention;
Figure 5 illustrates in perspective view and in isolated detail the collapsible housing of the embodiment of Figure 1 to 3; and
Figure 6 illustrates the mode of restraint of the collapsible housing of Figure 5.

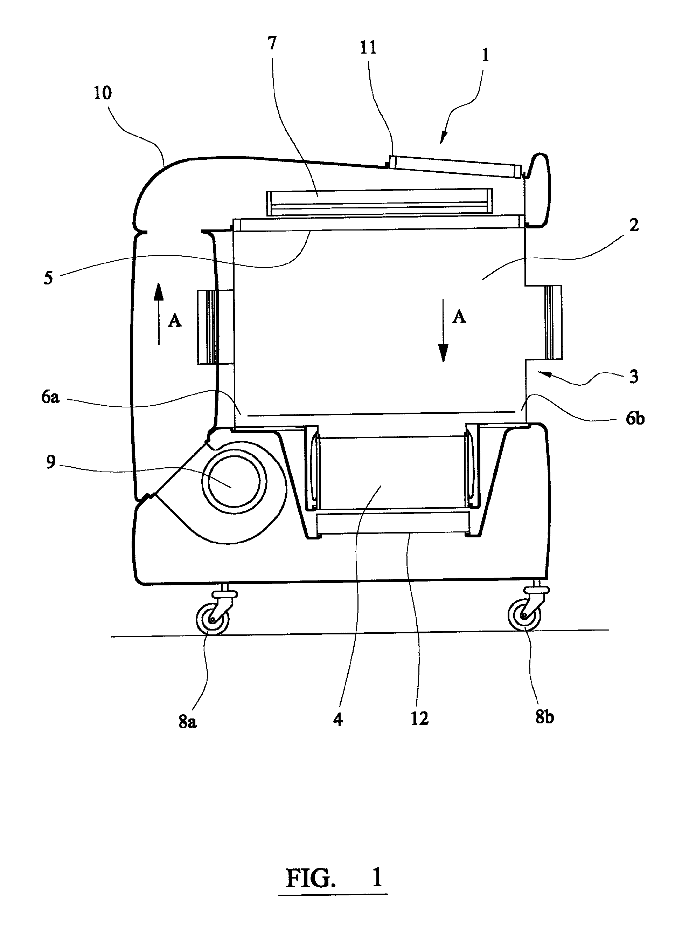

The embodiment of the containment assembly illustrated in various views in Figures 1, 2 and 3 is designated generally by reference numeral 1 and comprises a processing zone 2 enclosed by a collapsible housing 3. The collapsible housing 3 is a flexible polymer sheet of transparent polyurethane erected in an internal cavity in the body 25. An aperture in the basal wall of the collapsible housing 3 is fitted with an upper element of a primary HEPA filter 4 (99.97%, H13 rating). The joint between the upper element and the collapsible housing 3 is a combination of a mechanical joint and a seal based on an adhesive (eg of two pack type or from a caulking gun). The adhesive joint is formed permanently from RTV silicone or polysulphide. An aperture in the upper wall of the collapsible housing 3 is fitted with a PLF screen 5 which is a tensioned monofilament screen providing uniform air flow over its entire area. The containment assembly 1 is therefore adapted to provide down flow of air recirculatory A in the processing zone 2, through the primary HEPA filter 4 and then through a secondary HEPA filter 12 (99.97%, H13 rated). The flow of air A is generated by the clockwise circulatory action of a double inlet fan unit 9 (single phase 240V AC, 13amp supply) mounted beneath the processing zone 2. The fan unit 9 has an automatic constant volume control which compensates for filter congestion and has set back duty for when the containment assembly is run in isolator mode. At the upper end of the body 25, the flow of air A is circulated through a clean positive plenum 10 and then through the PLF screen 5. The bleed port 11 is closed when the assembly is used in isolator mode.

For the assistance of the operator, there is provided a supporting work surface 6 with a slotted perimeter 6a to ensure uninterrupted down flow of air. The processing zone 2 may be illuminated (if desired) by luminaries 7. The containment assembly is rendered mobile by virtue of heavy duty castors 8a and 8b with revolving buffers.

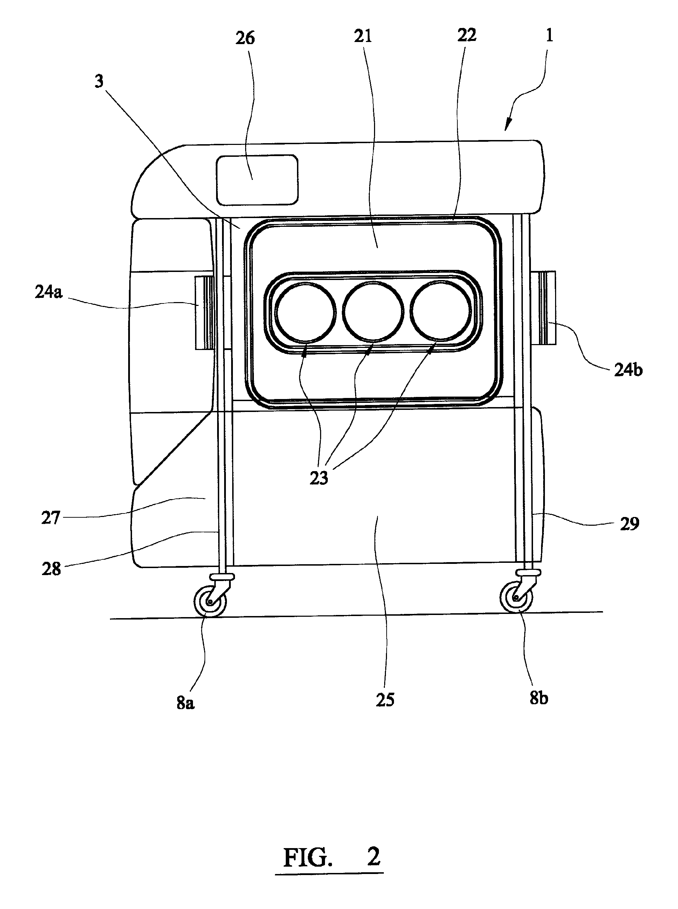

For the purposes of suppressing airborne dust, the air A is typically double HEPA filtered downwardly (*ie* through HEPA filters 4 and 12) at 0.3m/s. In the open mode, the open aperture of the collapsible housing may be typically provided with 0.5m/s face velocity for safe containment. Alternatively, the assembly may be provided with glove ports and gauntlets in isolator mode as illustrated in Figure 2 and described below.

In the front view shown in Figure 2, it will be seen that an aperture in the collapsible housing 3 is fitted with a rigid panel 21 for operation in isolator mode. The rigid panel 21 is fitted by means of a zip fastener 22 and comprises three glove ports 23 with gauntlets. The side walls of the body 25 are provided with transfer ports 24a, 24b which under normal circumstances are sealed. Each transfer port 24a, 24b is a tubular element which is capped by a rigid can end shaped plug to which it is sealed with a Jubilee or banjo clip.

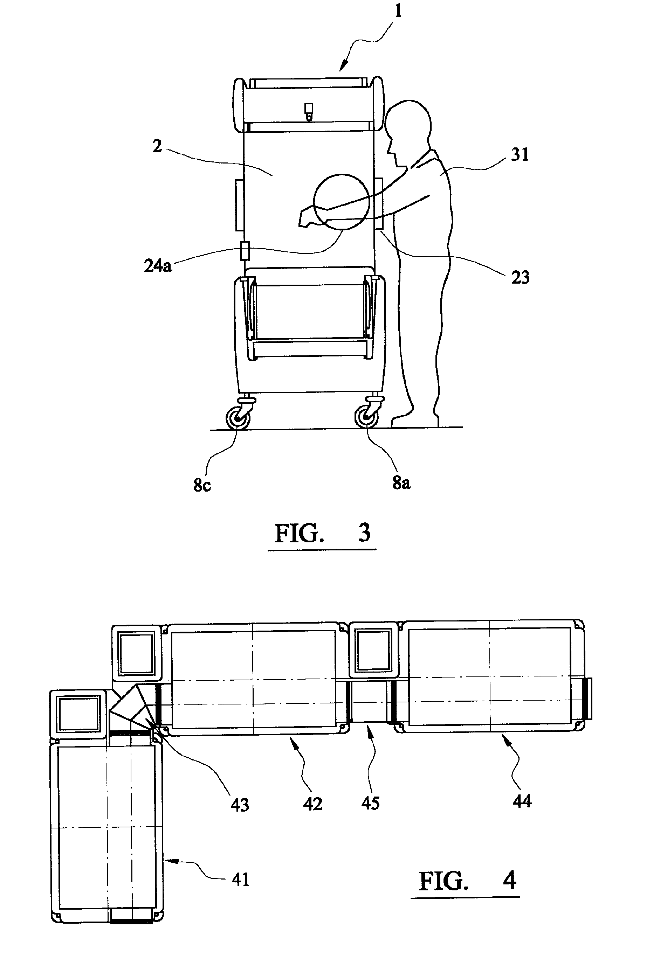

As illustrated in side view in Figure 3, the user 31 accesses the processing zone 2 by means of the gauntlets in the glove ports 23. The transfer port 24a is readily accessible to the user 31 (as is the transfer port 24b - not shown).

The main body of the assembly 25 is composed of rotation moulded plastic. During manufacture, appropriate voids are routed out for the fan unit 9 and other components. Mounted on the body 25 is a control panel with the assembly controls and alarms 26. Secured within a hollow conduit 27 in the moulded body 25 is a vertical steel tube 28 upon which is mounted the castor 8a. A similar arrangement applies for the castor 8b and vertical steel tube 29 and for castor 8c (and for the parallel vertical steel tube and castor hidden to the rear corner).

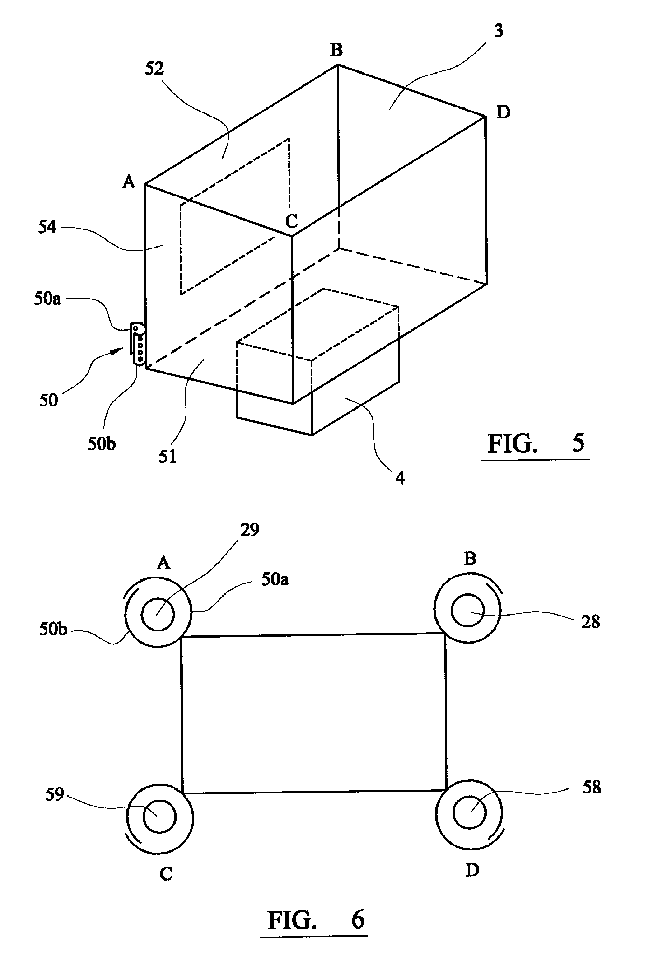

Figure 5 illustrates in isolated detail the collapsible housing 3 which is erected so as to define a substantially cuboidal enclosure. The basal wall 51 of the collapsible housing 3 is fitted with the upper element of the primary HEPA filter 4. The upper wall 52 of the enclosure 3 is fitted with the PLF screen 5 (as described hereinbefore with reference to Figure 1 but omitted from Figure 5 for clarity). An aperture 54 in the front wall of the collapsible housing permits the containment assembly to be used in open mode.

At each vertical edge of the collapsible housing 3 is a plurality of releasable restrainers, one of which is illustrated with reference numeral 50. The manner in which the collapsible housing 3 is supported at vertical edges A and B is illustrated from above in Figure 6. First and second parts 50a, 50b of each releasable restrainer 50 are fastened in opposite senses around the vertical steel tube 29 and engage in a press-stud type arrangement. By having similar arrangements at vertical steel tubes 28, 58 and 59, the collapsible housing 3 can be restrained in the cuboidal configuration.

In an embodiment of the system of the invention illustrated in sectional plan view in Figure 4, three containment assemblies of the type illustrated in Figures 1 to 3 are connected together. A right-handed containment assembly 41 is connected to the first end of a second assembly 42 by a rigid, mitred corner tube 43. A left-handed containment assembly 44 is connected to the second end of the containment assembly 42 by a rigid linear tube 45. By connecting adjacent transfer ports in this manner, it is possible for a user 31 to carry out contained transfer between adjacent containment assemblies. This may be useful in carrying out multi-stage chemical processes for example.

## Claims

1. A containment assembly comprising:
a body defining an interior cavity; and
a collapsible housing erected in the interior cavity so as to enclose a processing zone, wherein the surface of the collapsible housing is adapted or adaptable to permit an operator outside the processing zone to reach into the processing zone.

2. A containment assembly as claimed in claim 1 wherein the collapsible housing is faceted with one face being adapted or adaptable to permit an operator outside the processing zone to reach into the processing zone.

3. A containment assembly as claimed in claim 1 or 2 wherein the collapsible housing is multi-faceted with at least one face being adapted or adaptable to permit an operator outside the processing zone to reach into the processing zone.

4. A containment assembly as claimed in any preceding claim wherein the collapsible housing erected in the interior cavity adopts a substantially cuboidal configuration having a rear wall, a front wall, a basal wall, a first side wall, a second side wall and an upper wall, wherein the front wall and/or the rear wall is adapted or adaptable to permit an operator outside the processing zone to reach into the processing zone.

5. A containment assembly as claimed in any preceding claim wherein the collapsible housing is restrained in the interior cavity.

6. A containment assembly as claimed in claim 5 further comprising:
a plurality of restraining means for coupling the collapsible housing to the body.

7. A containment assembly as claimed in claim 6 wherein each restraining means comprises a first part attached to or integral with the collapsible housing capable of engaging a second part.

8. A containment assembly as claimed in claim 7 wherein the second part is attached to or is integral with the body.

9. A containment assembly as claimed in claim 7 wherein the second part is attached to or is integral with the collapsible housing.

10. A containment assembly as claimed in any preceding claim wherein the collapsible housing is releasably restrained in the interior cavity.

11. A containment assembly as claimed in claim 10 further comprising:
a plurality of releasable restraining means for releasably coupling the collapsible housing to the body.

12. A containment assembly as claimed in any preceding claim wherein the surface of the collapsible housing comprises one or more than one flexible portion in the shape of a glove or one or more than one flexible portion capable of being deformed into the shape of a glove which permits an operator outside the processing zone to reach into the processing zone.

13. A containment assembly as claimed in any preceding claim wherein the surface of the collapsible housing is adapted to permit an operator outside the processing zone to reach into the processing zone by incorporating an aperture.

14. A containment assembly as claimed in claim 13 wherein the aperture is fitted with a barrier means adapted or adaptable to permit an operator outside the processing zone to reach into the processing zone.

15. A containment assembly as claimed in claim 14 wherein a first part of the barrier means is composed of flexible material.

16. A containment assembly as claimed in claim 15 wherein the flexible material is supported within a rigid framework which forms the remaining part of the barrier means.

17. A containment assembly as claimed in claim 15 or 16 wherein the first part of the barrier means comprises one or more than one flexible portion in the shape of a glove or one or more than one flexible portion capable of being deformed into the shape of a glove.

18. A containment assembly as claimed in any preceding claim being a down flow containment assembly further comprising:
recirculating means for inducing recirculatory airflow downwardly in the processing zone,
wherein the interior cavity of the body is adapted at or near to its lower end to receive the airflow from the processing zone and at or near to its upper end to transmit the airflow to the processing zone,
wherein the collapsible housing comprises: an outlet adjacent to and in fluid communication with the lower end of the interior cavity and an inlet adjacent to and in fluid communication with the upper end of the interior cavity, said outlet being fitted with a filter element.

19. A containment assembly as claimed in claim 18 wherein the collapsible housing erected in the interior cavity adopts a substantially cuboidal configuration having a rear wall, a front wall, a basal wall, a first side wall, a second side wall and an upper wall, wherein the front wall and/or the rear wall is adapted or adaptable to permit an operator outside the processing zone to reach into the processing zone, wherein the outlet is incorporated in the basal wall and the inlet in the upper wall.

20. A containment assembly as claimed in any preceding claim wherein the body further comprises: one or more transfer ports to permit contained transfer from the processing zone to a remote location.

21. A containment assembly as claimed in claim 20 wherein the (or each) transfer port is a tubular transfer port.

22. A containment assembly as claimed in claim 20 or 21 wherein the remote location is a second containment assembly and the transfer port is fitted with a rigid transfer tube.

23. A containment assembly as claimed in claim 22 wherein the transfer tube is a linear transfer tube or an angled transfer tube.

24. A containment assembly as claimed in claim 4 wherein a first transfer port is incorporated into the body adjacent to the first side wall of the collapsible housing and a second transfer port is incorporated into the body adjacent to the second side wall of the collapsible housing.

25. A containment assembly as claimed in any preceding claim wherein the collapsible housing is erectable from a multi-panelled polymer sheet.

26. A containment assembly as claimed in claim 25 wherein the polymer sheet comprises a pouch or pocket foldable over the rear face of the filter element.

27. A modular system comprising a plurality of interconnected containment assemblies as defined in any preceding claim.
